Europäisches Patentamt

European Patent Office

Office européen des brevets

(19)

(11) Publication number: **0 168 928**
A2

# EUROPEAN PATENT APPLICATION

(21) Application number: 85303590.5

(22) Date of filing: 21.05.85

(51) Int. Cl.⁴: **C 08 L 23/08,** C 08 J 5/18
// (C08L23/08, 23:08)

(30) Priority: 21.05.84 GB 8412960

(43) Date of publication of application: 22.01.86
**Bulletin 86/4**

(84) Designated Contracting States: **BE DE FR GB IT NL SE**

(71) Applicant: **BCL LIMITED, Bath Road, Bridgwater Somerset TA6 4PA (GB)**

(72) Inventor: **Biddiscombe, Helen Ann, 81 Alfoxton Road, Bridgwater Somerset (GB)**
Inventor: **Porter, Christopher John, 8 Beckworth Close, Bridgwater Somerset (GB)**

(74) Representative: **Allard, Susan Joyce et al, BOULT, WADE & TENNANT 27 Furnival street, London EC4A 1PQ (GB)**

(54) **Wrapping film of ethylene copolymers.**

(57)  A wrapping film suitable for pallet stretch wrap applications is manufactured by the blown bubble process with extra cooling at the «frost line» from a blend of a linear ethylene/alpha olefin copolymer containing 3 to 18% by weight of alpha olefin and from 10 to 75% or more preferably from 45 to 55% by weight of the blend of a linear ethylene/butene-1 copolymer containing 3 to 18% by weight of butene-1. The alpha olefin is predominantly a $C_6$ to $C_8$ monomer or isomer thereof with or without a minor amount of a second different $C_4$ to $C_8$ olefin monomer, for example butene-1.

Films of the blend have both high clarity and desirable tear resistance and break elongation properties.

The films may contain a tackifying agent such as poly-isobutylene.

EP 0 168 928 A2

0168928

WRAPPING FILM OF ETHYLENE COPOLYMERS

This invention is concerned with wrapping films of ethylene copolymers and in particular linear copolymers of ethylene and another alpha olefin monomer. Such copolymers sometimes known as linear low copolymers of ethylene are manufactured by copolymerisation of the monomers under low pressure catalytic conditions. Since they exhibit toughness, they are particularly useful as wrapping materials, for example, as pallet stretch wraps when they are wound in strip form helically around a pallet load of goods so as to bind the goods together and the goods to the pallet by overlapping adhering turns of film.

For pallet stretch wraps it is most desirable that the films have a high tensile strength in the longitudinal direction of at least about 13.00 mega Newtons/square metre of cross section, a breaking elongation of at least 400% (that is, the elongation under tension at break) and a tear resistance when measured by the Elmendorf Tear Resistance method of at least seven grams per micron thickness of film in the longitudinal and transverse directions. By the Elmendorf tear resistance method is meant the method described in British Standard No. 2782/360A.
It is also desirable that the films have a low haze value of less than about 4.0%. By "haze value" is meant the percentage of transmitted light which on passing through the film under test deviates from the incident beam by forward scattering by more that an average of 2.5° to the incident beam.

One known linear ethylene copolymer having useful applications as a wrapping material is a linear ethylene/octene copolymer containing about 8% by weight of the octene monomer. When the copolymer is formed into a film by the chill cast method, that is by casting in a molten state upon a chilled roller, the film has excellent clarity with a haze value of about 1.5% but its tear resistance in the longitudinal direction and its breaking elongation are not ideally suitable for use as a pallet stretch wrap film. On the other hand, when the copolymer is formed into a film by the conventional blown bubble method, the breaking elongation and tear resistance in the longitudinal and transverse directions are ideal for pallet stretch wrap purposes but the haze value at 15 to 25% is very unattractive. By the application of additional cooling at the point of solidification of the tube, a haze value of 4 - 6% may be achieved.

It has now been found that when a linear ethylene/ alpha olefin in which the number of carbon atoms is from 6 to 8 such as an ethylene/octene copolymer is blended with certain proportions of linear ethylene/ butene-1 copolymer, a film formed from the blend by a blown bubble method with additional cooling as described above has, unexpectedly, a desirable low haze value with desirable tear resistance and breaking elongation properties.

According to the present invention a method of manufacturing a wrapping film suitable for use as a pallet stretch wrap comprises extruding through a ring die a blend of (1) a linear ethylene/alpha olefin copolymer containing from 3 to 18% by weight of alpha olefin based on the copolymer, the alpha olefin comprising at least a predominant i.e. greater than 50% amount of a monomer having from 6 to 8 carbon atoms, with (2) a linear ethylene/butene-1 copolymer containing from 3 to 18% by weight of butene-1 based on the butene-1 copolymer, the ethylene/butene-1 copolymer content in the blend being from 10 to 75% by weight of the blend, expanding the molten extrudate by air to form a bubble, cooling the travelling extrudate to a solid state to form a tubular film, directing further cooling means about the extrudate at the point of solidification and collapsing the tubular film.

The ethylene/alpha olefin copolymer may be a copolymer of ethylene and hexene or heptene or octene or an isomer of hexene, heptene or octene with or without a minor amount of a second different alpha olefin monomer having 4 to 8 carbon atoms, such as butene-1.

. The ethylene/alpha olefin copolymer and the ethylene/butene-1 copolymer of the present invention are manufactured by the so-called low pressure catalytic method resulting in long chains with little branching. They have a density in the range from 0.915 to 0.940 and a melt index in the range from 0.5 to 5.0.

In a preferred form of the invention, the ethylene/ alpha olefin copolymer content in the blend is from 40 to 60% or more preferably 45 to 55% by weight of the blend.

The further cooling means is conveniently a jet of cold air directed from an annulus arranged around the bubble at the so called "frost line" where the extrudate solidifies. Other cooling means which would bring about rapid quenching of the bubble may be used, such as a chilled internal mandrel.

The invention also includes a wrapping film when manufactured by the method of the present invention.

The wrapping film has inherent tackiness which when it is used as a pallet wrap assists in binding together goods and ajoining overlapping helices of the wrap. The tackiness may be improved by incorporating in the blend a tackifying agent such as polyisobutylene or atactic polypropylene in the range from 0.5 to 4.0% by weight of the blend.

The invention further relates to a method for securing to a pallet a load of good which comprises wrapping around said pallet and said goods positioned thereon a wrapping film as hereinbefore described. The invention still further relates to a pallet whenever wrapped in accordance with such a method.

The invention will now be more specifically described by way of the following Examples:

### EXAMPLE 1

In seven runs as shown in Table 1 various blends of a linear ethylene/octene copolymer (density 0.92 melt index 1.0) marketed as Dowlex 2045 by the Dow Chemical Company of Horgen, Switzerland and a linear ethylene/ butene-1 copolymer (density 0.92 melt index 1.0, butene-1 content 10% by weight) marketed as ESSO LL1001XV by Esso Chemical Limited, Southampton, England, were prepared by tumbling in a tumble blender. The blend was then extruded as a melt by means of a 60 millimetre screw extruder through a ring die having a diameter of 120mms and a gap of 2mms. The tubular extrudate was drawn upwards and expanded by air at a blow ratio of 2.5:1. At the same time cold air was blown on to the extrudate at the die face. A secondary cold air blower having the form of an annular ring was placed about 60 centimetres above the die so as to blow cold air on to the tube at about the point where the molten extrudate was solidifying, known as the "frost line". The tubular film formed on solidification of the extrudate was collapsed between nip rollers and wound into a roll.

In each of the seven runs the haze valve, tear resistance, tensile strength and breaking elongation were measured. As is seen from the results when the film composition is 100% linear ethylene/octene or linear ethylene/butene-1 copolymer either the haze value or the physical properties are not to a desirable standard, but that when certain blends of the copolymers form the film composition both the haze value and the physical properties are very acceptable for wrapping applications such as pallet stretch wrap. Runs 1,3 and 7 were repeated as Runs 8,9 and 10 except that the compositions were not extruded through a ring die but were cast on to a chromium plated chill roll. As will be seen from the results in Table 1, in each case the physical properties were below the desirable standard.

## EXAMPLE 2

The experiments described in Example 1 were repeated except that the linear ethylene/octene copolymer was replaced by a linear ethylene/hexene-1 copolymer. The results of the seven blown bubble runs (numbered 11 to 17) are set out in Table 2 which clearly shows that acceptable clarity and tear strength are obtained when certain proportions of ethylene/butene-1 copolymer are blended with the linear ethylene/hexene-1 copolymer. Runs 11, 14 and 20 were re-run as Runs 18,19 and 20 and like Runs 8,9 and 10 the compositions were, this time, extruded on to a chromium plated chill roll. The results of physical tests set out in Table 2 show that in these cases the physical properties were below the desirable standard.

TABLE 1

| BLOWN BUBBLE RUNS | BLEND | | HAZE VALUE % | ELMENDORF TEAR RESISTANCE GRAMS/MICRON | | TENSILE STRENGTH LONGITUDINAL DIRECTION MEGA NEWTONS/ METRE$^2$ | BREAKING ELONGATION % | FILM GAUGE (MICRONS) | RESULTS |
|---|---|---|---|---|---|---|---|---|---|
| | ETHYLENE/ OCTENE COPOLYMER % | ETHYLENE/ BUTENE 1 COPOLYMER % | | LONGITUDINAL DIRECTION | TRANSVERSE DIRECTION | | | | |
| 1 | 100 | 0 | 5.0 | 10.8 | 25.8 | 20 | 425 | 22 | POOR CLARITY |
| 2 | 90 | 10 | 3.5 | 9.8 | 31.3 | 19.2 | 425 | 22 | GOOD |
| 3 | 70 | 30 | 3.5 | 9.0 | 32 | 18.3 | 425 | 22 | GOOD |
| 4 | 50 | 50 | 2.0 | 9.8 | 27.5 | 17.2 | 425 | 22 | GOOD |
| 5 | 30 | 70 | 1.5 | 7.8 | 24.8 | 14.2 | 425 | 22 | GOOD |
| 6 | 10 | 90 | 1.5 | 5.3 | 16.5 | 14.0 | 415 | 22 | POOR TEAR |
| 7 | 0 | 100 | 1.5 | 5.2 | 16.4 | 14.7 | 410 | 22 | POOR TEAR |
| CHILL CAST | | | | | | | | | |
| 8 | 100 | 0 | 1.0 | 5.3 | 42 * | 19.6 | 310 | 23 | POOR TEAR AND BREAK |
| 9 | 50 | 50 | 1.0 | 5.5 | 41 * | 19.5 | 313 | 23 | POOR TEAR AND BREAK |
| 10 | 0 | 100 | 2.0 | 2.2 | 41 * | 19.5 | 310 | 23 | POOR TEAR AND BREAK |

* INCOMPLETE TEAR

TABLE 2

| BLOWN BUBBLE RUNS | BLEND | | HAZE VALUE % | ELEMENDORF TEAR RESISTANCE GRAMS/MICRON | | TENSILE STRENGTH LONGITUDINAL DIRECTION MEGA NEWTONS /METRE$^2$ | BREAKING ELONGATION % | FILM GAUGE (MICRONS) | RESULTS |
|---|---|---|---|---|---|---|---|---|---|
| | ETHYLENE/ HEXENE – 1 COPOLYMER % | ETHYLENE/ BUTENE – 1 COPOLYMER % | | LONGITUDINAL DIRECTION | TRANSVERSE DIRECTION | | | | |
| 11 | 100 | 0 | 4.5 | 9.7 | 27.0 | 16.4 | 450 | 22 | POOR CLARITY |
| 12 | 90 | 10 | 2.0 | 11.1 | 28.5 | 15.2 | 425 | 22 | GOOD |
| 13 | 70 | 30 | 2.5 | 8.5 | 30.8 | 15.3 | 425 | 22 | GOOD |
| 14 | 50 | 50 | 2.0 | 7.3 | 24.7 | 15.5 | 450 | 22 | GOOD |
| 15 | 30 | 70 | 2.5 | 7.4 | 19.0 | 13.3 | 450 | 22 | GOOD |
| 16 | 10 | 90 | 2.0 | 8.2 | 26.4 | 14.4 | 425 | 22 | POOR TEAR |
| 17 | 0 | 100 | 1.5 | 5.2 | 16.4 | 14.7 | 410 | 22 | POOR TEAR |
| CHILL CAST RUNS | | | | | | | | | |
| 18 | 100 | 0 | 1.0 | 6.2 | 38.6* | 24.8 | 288 | 19 | POOR TEAR & BREAK |
| 19 | 50 | 50 | 1.0 | 5.3 | 34* | 24.9 | 300 | 18 | POOR TEAR & BREAK |
| 20 | 0 | 100 | 2.0 | 2.2 | 41* | 19.5 | 310 | 23 | POOR TEAR & BREAK |

* INCOMPLETE TEAR

CLAIMS:

0168928

1. A method of manufacturing a wrapping film suitable for use as a pallet stretch wrap comprising extruding through a ring die a blend of (1) a linear ethylene/alpha olefin copolymer containing from 3 to 18% by weight of alpha olefin based on the copolymer, the alpha olefin comprising at least a predominant amount of a monomer having from 6 to 8 carbon atoms, with (2) a linear ethylene/butene-1 copolymer containing from 3 to 18% by weight of butene-1 based on the butene-1 copolymer, the ethylene/butene-1 copolymer content in the blend being from 10 to 75% by weight of the blend, expanding the molten extrudate by air to form a bubble, cooling the travelling extrudate to a solid state to form a tubular film, directing further cooling means about the extrudate at the point of solidification and collapsing the tubular film.

2. A method as claimed in claim 1 in which the ethylene/butene-1 copolymer content in the blend is from 45 to 55% by weight of the blend.

3. A method as claimed in claim 1 or claim 2 in which the ethylene/alpha olefin copolymer is a copolymer of ethylene with hexene or heptene or octene.

4. A method as claimed in claim 3 in which the alpha olefin includes a minor amount with respect to the monomer having from 6 to 8 carbon atoms of a second different alpha olefin monomer having from 4 to 8 carbon atoms.

5. A method as claimed in claim 4 in which the second different alpha olefin monomer is butene-1.

6. A method as claimed in claim 1 or claim 2 in which the linear ethylene/alpha olefin copolymer is a linear ethylene/octene-1 copolymer.

7. A method as claimed in any one of the preceding claims in which the further cooling means is a jet of cold air directed from an annulus arranged around the bubble.

8. A method as claimed in any one of the preceding claims in which the blend further contains a tackifying agent comprising from 0.5 to 4.0% by weight of the blend of polyisobutylene or atactic polypropylene.

9. A method for securing to a pallet a load of goods which comprises wrapping around said pallet and said goods positioned thereon a wrapping film as claimed in claim 1.

10. A pallet whenever wrapped in accordance with a method as claimed in claim 9.